# EUROPÄISCHE PATENTSCHRIFT

(11) **EP 2 493 669 B1**
(45) Veröffentlichungstag und Bekanntmachung des Hinweises auf die Patenterteilung: **23.03.2016**
(21) Anmeldenummer: 10770725.9
(22) Anmeldetag: 19.10.2010
(51) Int. Cl.: B27D 5/00, B29C 63/00, B29C 65/00, B29C 65/16, B23K 26/08, B23K 26/073

(54) **VORRICHTUNG UND VERFAHREN ZUR BEKANTUNG VON WERKSTÜCKEN**
DEVICE AND METHOD FOR CREATING EDGES OF WORKPIECES
DISPOSITIF ET PROCÉDÉ POUR BORDER DES PIÈCES

(30) Priorität: 27.10.2009 DE 102009050858
(43) Veröffentlichungstag der Anmeldung: 05.09.2012
(73) Patentinhaber: IMA Klessmann GmbH Holzbearbeitungssysteme, 32312 Lübbecke (DE)
(72) Erfinder: HAMPEL, Thomas, 32312 Lübbecke (DE); SEIFERT, Uwe, 32361 Preußisch Oldendorf (DE)
(74) Vertreter: Schober, Mirko
(86) Internationale Anmeldenummer: PCT/EP2010/006378
(87) Internationale Veröffentlichungsnummer: WO 2011/054445

(56) Entgegenhaltungen:
- EP-A2- 0 213 471
- EP-A2- 1 800 813
- US-A- 5 948 172
- US-A1- 2005 205 534

## Beschreibung

### Technisches Gebiet

Die Erfindung betrifft eine Vorrichtung zur Bekantung von Werkstücken gemäß dem Oberbegriff des Anspruchs 1 und ein Verfahren zur Bekantung von Werkstücken 4. Eine solche gemäß dem Oberbegriff des Anspruchs Vorrichtung und ein solches Verfahren sind aus EP 1 800 813 A2 bekannt.

### Stand der Technik

Es sind z.B. aus EP 1 163 864 A1 oder EP 1 233 853 B1 Verfahren zur Bekantung von Werkstücken bekannt, bei denen ein Kantenband an das Werkstück zunächst herangeführt und dann mit diesem verbunden wird. Dabei bildet sich durch die Heranführung des Kantenbandes an das Werkstück ein Fügespalt aus. Im Bereich dieses Fügespalts wird eine Haftschicht oder haftvermittelnde Schicht (im Folgenden Haftschicht) durch Strahlung aktiviert, so dass sie ihre Haftwirkung entfalten kann.

In der Praxis ist es dabei oft wünschenswert, dass gerade im Bereich der Ränder des Kantenbandes eine besonders gute Verbindung zwischen Werkstück und Kantenband zustande kommt. Dies spielt insbesondere dann eine Rolle, wenn eine feuchtigkeitsdichte Verbindung des Kantenbandes mit Kaschierungselementen auf anderen als der bekanteten Werkstückfläche erreicht werden soll. Hierfür ist es notwendig, den Strahlungseintrag in den Randbereichen des Kantenbandes gegenüber dem Rest der bestrahlten Fläche zu erhöhen.

Auch wenn nur ein gleichmäßiger Strahlungseintrag quer zur Laufrichtung des Kantenbandes erzielt werden soll, ist dies bereits problematisch, da die meisten geeigneten Strahlungsquellen naturgemäß eine radiale Intensitätsverteilung des erzeugten Strahls mit einem Maximum im Zentrum aufweisen.

Nach dem Stand der Technik wird die gewünschte Verteilung der Strahlungsintensität auf dem Kantenband mit oszillierenden Spiegelöptiken erreicht. Durch diese Spiegeloptiken wird der Strahlfleck, d.h. die Zone, in der die Strahlung auf das Kantenband trifft, quer zu dessen Transportrichtung auf dem Kantenband in einer Weise bewegt, aus der sich insgesamt eine höhere Verweildauer des Strahlflecks in den Randbereichen als auf dem Rest der Oberfläche des Kantenbandes ergibt.

Diese Lösung hat den Nachteil, dass die oszillierenden Spiegeloptiken eine komplizierte und dadurch teure und fehleranfällige, mechanische Lösung darstellen. Zudem wird bei der Verwendung von Kantenbändern unterschiedlicher Breite eine Anpassung der Oszillationsbewegung beim Chargenwechsel notwendig. Diese Anpassung erfordert die aufwändige Berechnung neuer Bewegungsmuster für die Spiegeloptiken. Weiterhin ergibt sich der Nachteil, dass auch bei sorgfältiger Strahlführung ein annähernd gleichmäßiger Strahlungseintrag in Laufrichtung des Kantenbandes nur möglich ist, wenn die Geschwindigkeit der Oszillationsbewegung um ein Vielfaches größer ist als die Laufgeschwindigkeit des Kantenbandes.

### Die Erfindung

Daher liegt der Erfindung die Aufgabe zugrunde, eine Vorrichtung und ein Verfahren der eingangs erwähnten Art anzugeben, bei denen die erwähnten Nachteile nicht auftreten.

Gelöst wird diese Aufgabe mit den Merkmalen der Ansprüche 1 und 4, vorteilhafte Ausführungsformen finden sich in den jeweiligen Unteransprüchen.

Erfindungsgemäß wird die Strahlung von der Strahlungsquelle kommend durch einen Lichtleiter oder Strahlengang an eine Strahlprofilierungseinrichtung herangeführt. Diese ist dazu ausgelegt, den Strahl in einer Richtung soweit aufzuweiten, dass das gesamte Kantenband oder jedenfalls der vom Kantenband zu bedeckende Teil der Schmalseite des Werkstücks mit dem Strahl erfasst werden kann. Vorteilhafterweise bietet die verwendete Strahlprofilierungseinrichtung zudem die Möglichkeit, die Verteilung der Strahlungsintensität in der Aufweitungsrichtung so zu ändern, dass sich Intensitätsmaxima im Bereich des Randes des Kantenbandes ausbilden.

Dadurch wird es möglich, zum einen einen kontinuierlichen und damit, unabhängig von der Laufgeschwindigkeit des Kantenbandes, gleichmäßigen Strahlungseintrag zu gewährleisten. Zum anderen sind keine bewegten Teile notwendig. Lediglich bei der Umstellung der Produktion auf eine andere Kantenbandbreite oder Schmalseitenbreite des Werkstücks ist eine Anpassung des Strahlprofils an das neue Kantenband notwendig. Diese gestaltet sich jedoch deutlich einfacher, da das Strahlprofil direkt gewählt werden kann und nicht auf das Bewegungsmuster einer Spiegeloptik umgerechnet werden muss.

### Kurzbeschreibung Zeichnungsabbildungen

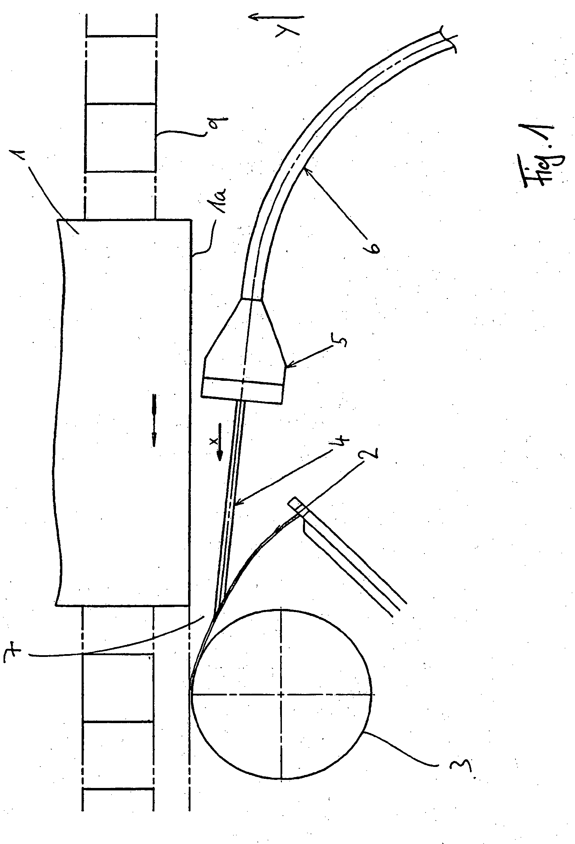

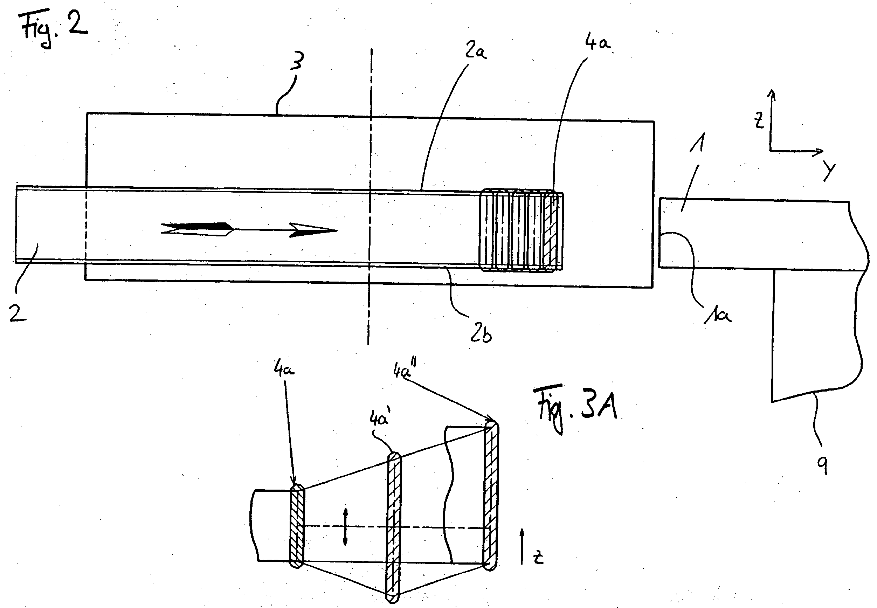

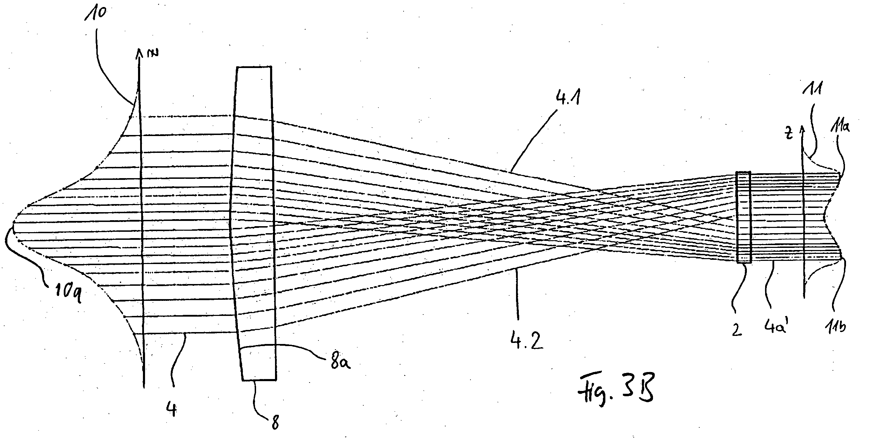

Die Erfindung wird nachfolgend anhand der Figuren 1 bis 3B schematisch näher erläutert.
Figur 1 zeigt eine schematische Draufsicht auf eine erfindungsgemäße Vorrichtung.
Figur 2 zeigt schematisch die Lage des aufgeweiteten Strahlflecks auf dem Kantenband bei einer erfindungsgemäßen Vorrichtung zu verschiedenen Zeitpunkten.
Figur 3A zeigt schematisch die Anpassung von Breite und Lage des Strahlflecks an unterschiedliche Kantenbandbreiten in einer vorteilhaften Ausführungsform.
Figur 3B zeigt schematisch die Änderung der Intensitätsverteilung in einer vorteilhaften Ausführungsform.

Die Strahlung 4, bei deren Strahlungsquelle es sich in einer bevorzugten Ausführungsform um einen Laser handelt, wird durch den Lichtleiter oder Strahlengang 6 der Strahlprofilierungseinrichtung 5 zugeführt. Aus dieser austretend trifft der Strahl, vorzugsweise im Bereich des Fügespalts 7, im Bereich des Strahlflecks 4a auf das Kantenband 2. Die Haftschicht auf dem Kantenband 2 wird daraufhin durch die auftreffende Strahlung 4 aktiviert. Das Kantenband 2 mit der aktivierten. Haftschicht wird danach durch eine geeignete Andruckvorrichtung 3, vorzugsweise eine Andrückrolle, gegen die zu bekantende Oberfläche 1a des Werkstücks 1 gedrückt. Dabei entsteht eine dauerhafte Verbindung zwischen Kantenband 2 und Werkstück.

### Weg zur Ausführung der Erfindung

In der Strahlprofilierungseinrichtung 5 wird der Strahlfleck 4a in Richtung Z, quer zur Laufrichtung X des Kantenbandes 2, aufgeweitet. Vorteilhafterweise ist die Strahlprofilierungseinrichtung 5 so ausgeführt, dass bei der Umstellung der Produktion auf ein Kantenband anderer Breite eine andere Breite des Strahlflecks 4a' gewählt werden kann. Bevorzugt wird eine Breite des Strahlfleck 4a' gewählt, die mindestens der Breite des Kantenbandes 2 bzw. der zu bedeckenden Schmalseite la des Werkstücks 1 entspricht. Wenn beispielsweise Kantenbänder verschiedener Breite mit einem Rand immer an der gleichen Position der Z-Achse geführt werden sollen, so sieht eine vorteilhafte Ausführungsform eine Strahlprofilierungseinrichtung 5 vor, die den Strahlfleck 4a" in seiner Position in Richtung Z, quer zur Verarbeitungsrichtung X des Kantenbandes, verschiebt. Bevorzugt wird der Strahlfleck 4a" derart verschoben, dass einer seiner Ränder in der Aufweitungsrichtung Z, quer zur Laufrichtung X des Kantenbandes 2, bei einer Breitenänderung immer die gleiche Position entlang der Aufweitungsachse Z beibehält.

Die Strahlprofilierungseinrichtung 5 weist eine Einrichtung 8 zur Änderung der Intensitätsverteilung auf. Diese kann, z.B. durch Lichtbrechung an einer geeignet gestalteten Oberfläche 8a, die Intensitätsverteilung 10 der Strahlung 4 derart verändern, dass der Strahlfleck 4a' eine für die Produktion vorteilhafte Intensitätsverteilung aufweist. Beispielsweise ist es möglich, die Intensitätsverteilung 11 so zu gestalten, dass diese zwei Maxima 11a und 11b im Bereich der Ränder des Kantenbandes aufweist. Die beiden Maxima 11a und 11b können beispielsweise dadurch erzeugt werden, dass zwei Teilstrahlen 4.1 und 4.2, vorteilhafterweise die Hälften des Strahlenbündels bei der Teilung in 2 Abschnitte in Aufweitungsrich-tung Z, gekreuzt werden, so dass sich aus einem ursprünglichen Intensitätsmaximum 10a in der Mitte des Strahlflecks 2 Intensitätsmaxima 11a und 11b an dessen Rändern in Aufweitungsrichtung Z ergeben.

## Patentansprüche

1. Vorrichtung zur Bekantung von Werkstücken (1) mit einem Kantenband (2),
mit einer Strahlenquelle,
einer Andruckeinrichtung (3) zum Andrücken des Kantenbandes (2) an das Werkstück (1), und
einer Andruckzone, in deren Bereich das Kantenband (2) durch relative Bewegung von Werkstück (1) und Kantenband (2) an die Schmalseite (1a) des Werkstücks (1) unter Bildung eines Fügespaltes (7) herangeführt und dann mittels der Andruckeinrichtung (3) angedrückt wird,
wobei die aus der Strahlungsquelle ausgestrahlte Strahlung (4) die Aktivierung einer Haftschicht oder haftvermittelnden Schicht bewirkt, mittels derer Kantenband (2) und Werkstück (1) verbunden werden, wobei die Vorrichtung weiter einen Lichtleiter oder Strahlengang sowie eine zwischen Lichtleiter oder Strahlengang (6) und Kantenband (2) angeordnete Strahlprofilierungseinrichtung (5) aufweist, welche dazu ausgelegt ist, das Profil eines auf dem Kantenband (2) durch die darauf auftreffende Strahlung erzeugten Strahlflecks in einer Richtung (Z) senkrecht zur Laufrichtung des Kantenbandes (2) so einzustellen, dass die Länge des Flecks in der Richtung (Z) senkrecht zur Laufrichtung des Kantenbandes (2) wenigstens die Breite des Kantenbandes (2) oder des vom Kantenband (2) zu bedeckenden Teils der Schmalseite (1a) des Werkstücks (1) aufweist,
wobei die Strahlung (4) über den Lichtleiter oder Strahlengang (6) und die Strahlprofilierungseinrichtung (5) geführt ist,
**dadurch gekennzeichnet,**
**dass** die Strahlungsprofilierungseinrichtung (5) eine Einrichtung (8) zur Änderung der Intensitätsverteilung der auf das Kantenband (2) auftreffenden Strahlung entlang der Richtung (Z) senkrecht zur Laufrichtung des Kantenbandes (2) aufweist, wobei die Einrichtung (8) so ausgelegt ist, dass die Intensitätsverteilung (10) der in die Einrichtung (8) eingestrahlten Strahlung (4) in Richtung (Z) senkrecht zur Laufrichtung des Kantenbandes (2) so verändert wird, dass die aus der Einrichtung (8) austretende Strahlung (4a') eine Intensitätsverteilung (11) in Richtung (Z) senkrecht zur Laufrichtung des Kantenbandes (2) aufweist, welche im Bereich der Ränder (2a, 2b) des Kantenbandes (2) Intensitätsmaxima (11a, 11b) aufweist.

2. Vorrichtung nach Anspruch 1,
**dadurch gekennzeichnet,**
**dass** die Strahlung (4) eine Laserstrahlung ist.

3. Vorrichtung nach einem der vorherigen Ansprüche,
**dadurch gekennzeichnet,**
**dass** eine Verstelleinrichtung vorgesehen ist, die so ausgelegt ist, dass der Strahlenfleck in der Richtung (Z) senkrecht zur Laufrichtung des Kantenbandes (2) verschieblich ist.

4. Verfahren zur Bekantung von Werkstücken (1) mit einem Kantenband (2), bei dem im Bereich einer Andruckzone das Kantenband (2) durch relative Bewegung von Werkstück (1) und Kantenband (2) an die Kante (1a) des Werkstücks (1) unter Bildung eines Fügespaltes (7) herangeführt und dann mittels einer Andruckeinrichtung (3) angedrückt wird, wobei eine Strahlung (4) eingesetzt wird, die die Aktivierung einer Haftschicht oder haftvermittelnden Schicht bewirkt, mittels derer Kantenband (2) und Werkstück (1) verbunden werden,
wobei das Profil der Strahlung (4) vor dem Auftreffen auf das Kantenband (2) so eingestellt wird, dass die Länge des auf dem Kantenband (2) durch die Strahlung (4) erzeugten Strahlungsflecks (4a) in der Richtung (Z) senkrecht zur Laufrichtung des Kantenbandes (2) wenigstens die Breite des Kantenbandes (2) aufweist,
**dadurch gekennzeichnet,**
**dass** die eine Änderung der Intensitätsverteilung der auf das Kantenband (2) auftreffenden Strahlung entlang der Richtung (Z) senkrecht zur Laufrichtung des Kantenbandes (2) derart erfolgt, dass die Intensitätsverteilung (10) der Strahlung (4) in Richtung (Z) senkrecht zur Laufrichtung des Kantenbandes (2) so verändert wird, dass die auf das Kantenband auftreffende Strahlung (4a') eine Intensitätsverteilung (11) in Richtung (Z) senkrecht zur Laufrichtung des Kantenbandes (2) aufweist, welche im Bereich der Ränder (2a, 2b) des Kantenbandes (2) Intensitätsmaxima (11a, 11b) aufweist.

5. Verfahren nach Anspruch 4,
**dadurch gekennzeichnet,**
**dass** die Strahlung (4) eine Laserstrahlung ist.

6. Verfahren nach einem der Ansprüche 4 oder 5,
**dadurch gekennzeichnet,**
**dass** der Strahlenfleck in der Richtung (Z) senkrecht zur Laufrichtung des Kantenbandes (2) verschoben wird.

## Claims

1. Apparatus for edging workpieces (1) with an edging strip (2), comprising a radiation source, a contact pressure device (3) for pressing the edging strip (2) against the workpiece (1), and a contact pressure zone in the area of which the edging strip (2) is directed by relative movement of the workpiece (1) and the edging strip (2) towards the narrow side (1a) of the workpiece (1) whilst forming a joining gap (7), and is then pressed on the narrow side of the workpiece by means of the contact pressure device (3), wherein the radiation (4) emerging from the radiation source, effects the activation of an adhesive layer or adhesion-mediating layer, by means of which the edging strip (2) and workpiece (1) are connected, the apparatus further comprising a light guide or radiation path (6) as well as a radiation profiling means (5) arranged between the light guide or radiation path (6) and the edging strip (2), the means being adapted for shaping the profile of a radiation spot generated by radiation hitting the edging strip (2) in a direction (Z) perpendicular to the feeding direction of the edging strip (2) such that the length of the spot in the direction (Z) perpendicular to the feeding direction of the edging strip (2) has at least the width of the edging strip (2) or of the portion of the workpiece's narrow side (1a) to be covered by the edging strip (2), wherein the radiation (4) is directed via said light guide or radiation path (6) and the radiation profiling means (5), **characterised in that** the radiation profiling means (5) comprises a device (8) for changing the intensity distribution of the radiation hitting the edging strip (2) along the direction (Z) perpendicular to the feeding direction of the edging strip (2), the device (8) being adapted such that the intensity distribution (10) of the radiation entering the device (8) is altered in the direction (Z) perpendicular to the feeding direction of the edging strip (2) such that the radiation (4a') emerging from the device (8) has an intensity distribution (11) in the direction (Z) perpendicular to the feeding direction of the edging strip (2), which hat intensity peaks (11 a, 11 b) at the edges (2a, 2b) of the edging strip (2).

2. Apparatus according to claim 1 **characterised in that** the radiation (4) is a laser radiation.

3. Apparatus according to one of the preceding claims **characterised in that** an adjustment device is provided which is designed such that the radiation spot is displaceable in direction (Z) perpendicular to the feeding direction of the edging strip (2).

4. Method for edging workpieces (1) with an edging strip (2), wherein in the area of a contact pressure zone the edging strip (2) is directed towards the edge (1a) of the workpiece (1) by relative movement of the workpiece (1) and edging strip (2), whilst forming a joining gap (10), and is then pressed on by means of a contact pressure device (3), wherein a radiation (4) is employed that effects the activation of an adhesive layer or adhesion-mediating layer by means of which the edging strip (2) and workpiece (1) are connected, wherein the profile of the radiation is adjusted such that the length of the spot (4a) in direction (Z) perpendicular to the feeding direction of the edging strip (2) has at least the width of the edging strip (2), prior to the radiation (4) hitting the edging strip (2), **characterised in that** the change of the intensity distribution of the radiation hitting the edging strip (2) along the direction (Z) perpendicular to the feeding direction of the edging strip (2) is performed such that the intensity distribution (10) of the radiation (4) in direction (Z) perpendicular to the feeding direction of the edging strip (2) is altered so that the radiation (4') has an intensity distribution (11) in the direction (Z) perpendicular to the feeding direction of the edging strip (2), which has intensity peaks (11 a, 11 b) at the edges (2a, 2b) of the edging strip (2).

5. Method according to claim 4 **characterised in that** the radiation (4) is a laser radiation.

6. Method according to claim 4 or 5 **characterised in that** the radiation spot is displaced in direction (Z) perpendicular to the feeding direction of the edging strip (2).

## Revendications

1. Dispositif pour border des pièces à traiter (1) avec une bande de chant (2), lequel comprend une source de rayonnement,
une installation de pression (3) qui est destinée à presser la bande de chant (2) sur la pièce à traiter (1),
et
une zone de pression, dans laquelle la bande de chant (2) est amenée, par déplacement relatif de la pièce à traiter (1) et de la bande de chant (2), sur le côté étroit (1a) de la pièce à traiter (1), en formant une fente d'assemblage (7), et est pressée ensuite au moyen de l'installation de pression (3),
sachant que le faisceau (4), émis par la source de rayonnement, provoque l'activation d'une couche d'adhésif ou d'une couche d'agent de liaison au moyen de laquelle la bande de chant (2) et la pièce à traiter (1) sont liées ensemble,
sachant que le dispositif présente en plus un guide de lumière ou une trajectoire de faisceau, ainsi qu'une installation de profilage de faisceau (5) qui, disposée entre le guide de lumière ou la trajectoire de faisceau (6) et la bande de chant (2), est configurée pour régler, dans une direction (Z) perpendiculaire à la direction de déplacement de la bande de chant (2), le profil d'une tache de faisceau, générée sur la bande de chant (2) par le faisceau frappant celle-ci, de telle manière que la longueur de la tache présente, dans la direction (Z) perpendiculaire à la direction de d'déplacement de la bande de chant (2), au moins la largeur de la bande de chant (2) ou de la partie du côté étroit (1a) de la pièce à traiter (1) devant être recouvert,
sachant que le faisceau (4) est conduit par le guide de lumière ou la trajectoire de faisceau (6) et l'installation de profilage de faisceau (5), **caractérisé en ce que**
l'installation de profilage de faisceau (5) présente un installation (8) qui est destinée à modifier, le long de direction (Z) perpendiculaire à la direction de déplacement de la bande de chant (2), la répartition d'intensité du faisceau frappant la bande de chant (2), sachant que l'installation (8) est configurée de telle manière que la répartition d'intensité (10) du faisceau (4), émis dans la l'installation (8), la direction (Z) perpendiculaire à la direction de déplacement de la bande de chant (2), soit modifiée de sorte que le faisceau (4a'), en provenance de l'installation (8), présente, dans la direction (Z) perpendiculaire à la direction de déplacement de la bande de chant (2), une répartition d'intensité (11) représentant un maximum d'intensité (11a, 11b) dans la région des bords (2a, 2b) de la bande de chant (2).

2. Dispositif selon la revendication 1,
**caractérisé en ce que**
le faisceau (4) est un faisceau laser.

3. Dispositif selon l'une des revendications précédentes,
**caractérisé en ce que**
l'on prévoit une installation de réglage qui est configurée de telle manière que la tache de faisceau puisse être déplacée dans la dans la direction (Z) perpendiculaire à la direction de déplacement de la bande de chant (2).

4. Procédé pour border des pièces à traiter (1) avec une bande de chant (2), dans lequel, dans la région d'une zone de pression, la bande de chant (2) est amenée, par déplacement relatif de la pièce à traiter (1) et de la bande de chant (2), sur le côté étroit (1a) de la pièce à traiter (1), en formant une fente d'assemblage (7), et est pressée ensuite au moyen d'une installation de pression (3), sachant que l'on utilise un faisceau (4) qui provoque l'activation d'une couche d'adhésif ou d'une couche d'agent de liaison au moyen de laquelle la bande de chant (2) et la pièce à traiter (1) sont liées ensemble,
sachant que le profil du faisceau (4), avant qu'il frappe la bande de chant (2), est réglé de telle manière que la longueur de la tache générée par le faisceau (4) sur la bande de chant (2), présente, dans la direction (Z) perpendiculaire à la direction de déplacement de la bande de chant (2), au moins la largeur de la bande de chant (2)
**caractérisé en ce que**
la modification de la répartition d'intensité du faisceau frappant la bande de chant (2) est effectuée, le long de la dans la direction (Z) perpendiculaire à la direction de déplacement de la bande de chant (2), s'effectue de telle manière que la répartition d'intensité (10) du faisceau (4), dans la direction (Z) perpendiculaire à la direction de déplacement de la bande de chant (2), soit modifiée de sorte que le faisceau (4a'), frappant la bande de chant, présente, dans la dans la direction (Z) perpendiculaire à la direction (Z) de déplacement de la bande de chant (2), une répartition d'intensité (11) qui représente un maximum d'intensité (11a, 11b) dans la région des bords (2a, 2b) de la bande de chant (2).

5. Procédé selon la revendication 4,
**caractérisé en ce que**
le faisceau (4) est un faisceau laser.

6. Procédé selon l'une des revendications 4 ou 5,
**caractérisé en ce que**
la tache de faisceau est déplacée dans la direction (Z) perpendiculaire à la direction de déplacement de la bande de chant (2).
